# EUROPEAN PATENT APPLICATION

(11) **EP 3 832 608 A1**
(43) Date of publication of application: **09.06.2021**
(21) Application number: 19212769.4
(22) Date of filing: 02.12.2019
(51) Int. Cl.: G07C 3/00

(54) **A SOLUTION FOR PROVIDING VISUAL OUTPUT REPRESENTING MAINTENANCE RELATED INFORMATION OF A PEOPLE TRANSPORT SYSTEM OR AN ACCESS CONTROL SYSTEM**

(71) Applicant: KONE Corporation, 00330 Helsinki (FI)
(72) Inventor: SILTANEN, Sanni, 00330 HELSINKI (FI); LAITINEN, Jukka, 00330 HELSINKI (FI)
(74) Representative: Berggren Oy

(57) **Abstract**

The invention relates to a maintenance interface system (200) for providing a visual output (410) representing maintenance related information of a people transport system (100) or access control system (120). The maintenance interface system (200) comprises: a storage unit (202) having maintenance related information of the people transport system (100) or the access control system (120) stored thereon, and a user device (204). The user device (204) is arranged to: receive at least part of the stored maintenance related information from the storage unit (202) in response to detecting an activation event, and provide a visual output (410) representing the received maintenance related information. The invention relates also to a method for providing visual output (410) representing maintenance related information of a people transport system (100) or the access control system (120).

## Description

### TECHNICAL FIELD

The invention concerns in general the technical field of people transport and access control systems. Especially the invention concerns maintenance interface devices of the people transport and maintenance interface devices of access control systems.

### BACKGROUND

Typically, people transport systems, such as elevator systems, escalator systems, and moving walkway systems, or access control systems, such as automatic door systems, turnstile systems, gate systems, may comprise one or more maintenance interface devices, such as test and emergency panel, e.g. a maintenance access panel (MAP), for providing one or more maintenance, test, inspection and/or emergency operations of the conveyor system. Typically in elevator systems the maintenance interface devices may be arranged outside an elevator shaft, for example inside a machine room of the elevator system or at a landing, to enable that the one or more maintenance, test, inspection and/or emergency operations of the conveyor system may be carried out via the maintenance interface device from outside the shaft. The maintenance interface devices shall be accessible to authorized persons only.

Typically, the maintenance interface devices may comprise physical input devices, such as buttons, keyboard, keypad, touch screen and similar, for receiving user input. Moreover, the maintenance interface devices may typically comprise physical output devices as display, loudspeaker, touch screen, and similar, for providing visual or audible output detectable by the user of the maintenance interface device, such as maintenance personnel.

It may be beneficial to provide improved solutions for the maintenance interface devices.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a maintenance interface system and a method for providing a visual output representing maintenance related information of a people transport system or access control system. Another objective of the invention is that the maintenance interface system and the method for providing a visual output representing maintenance related information of a people transport system or access control system enable providing an adaptable user interface for maintenance purposes in people transport systems or access control systems.

The objectives of the invention are reached by a maintenance interface system and a method as defined by the respective independent claims.

According to a first aspect, a maintenance interface system for providing a visual output representing maintenance related information of a people transport system or access control system is provided, wherein the maintenance interface system comprising: a storage unit having maintenance related information of the people transport system or the access control system stored thereon, and a user device arranged to: receive at least part of the stored maintenance related information from the storage unit in response to detecting an activation event, and provide a visual output representing the received maintenance related information.

The provided visual output may be augmented reality display, virtual reality display, or mixed reality display.

The user device may further comprise one or more input devices and/or one or more sensor devices arranged to detect user indication, wherein the user device may be arranged to generate at least one control signal to a control unit of the people transport system or the access control system for controlling one or more operations of the people transport system or the access control system and/or one or more operational parameters of the people transport system or the access control system in association with the detected user indication. The user indication may comprise at least one of the following: gesture, gaze, voice, touch.

The detected activation event may be one of the following: manual activation, automatic activation.

Moreover, detecting the automatic activation event may comprise: detecting a location of the user device, or detecting the user device in a vicinity of the people transport system or the access control system.

The part of the maintenance related information represented with the provided visual output may depend on an access level assigned for the user device.

The user device may be a wearable smart device, a mobile terminal device, or a digital user device comprising one or more displays or other capability to display the visual output.

The people transport system may be one of the following: an elevator system, an escalator system, or a moving walkway system, and the access control system may be one of the following: automatic door system, turnstile system, gate system.

According to a second aspect, a method for providing visual output representing maintenance related information of a people transport system or the access control system is provided, wherein the method comprising: detecting an activation event; receiving, by a user device, at least part of maintenance related information of the people transport system or the access control system stored on a storage unit; and providing, by the user device, a visual output representing the received maintenance related information.

The provided visual output may be augmented reality display, virtual reality display, or mixed reality display.

The method may further comprise: detecting, by one or more input devices and/or one or more sensor devices of the user device, user indication; and generating, by the user device, at least one control signal to a control unit of the people transport system or the access control system for controlling one or more operations of the people transport system or the access control system and/or one or more operational parameters of the people transport system or the access control system in association with the detected user indication. The user indication may comprise at least one of the following: gesture, gaze, voice, touch.

The detected activation event may be one of the following: manual activation, automatic activation.

Moreover, detecting the automatic activation event may comprise: detecting a location of the user device or detecting the user device in a vicinity of the people transport system or the access control system.

The part of the stored maintenance related information represented with the provided visual output may depend on an access level assigned for the user device.

The user device may be a wearable smart device, a mobile terminal device, or a digital user device comprising one or more displays or other capability to display the visual output.

The people transport system may be one of the following: an elevator system, an escalator system, a moving walkway system; and the access control system may be one of the following: automatic door system, turnstile system, gate system.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1A illustrates schematically an example of a people transport system in which a maintenance interface system according to a present invention may be implemented.
Figure 1B illustrates schematically an example of an access control system in which a maintenance interface system according to the present invention may be implemented.
Figure 2 illustrates schematically an example of a maintenance interface system according to the present invention.
Figure 3 illustrates schematically an example of a method according to the present invention.
Figures 4A-4C illustrate schematically other examples of a maintenance interface system according to the present invention.
Figures 5A-5C illustrate schematically examples views of a visual output according to the present invention.
Figure 6 illustrates schematically another example of a method according to the present invention.
Figure 7 schematically illustrates an example of a user device according to the present invention.

### DESCRIPTION OF THE EXEMPLIFYING EMBODIMENTS

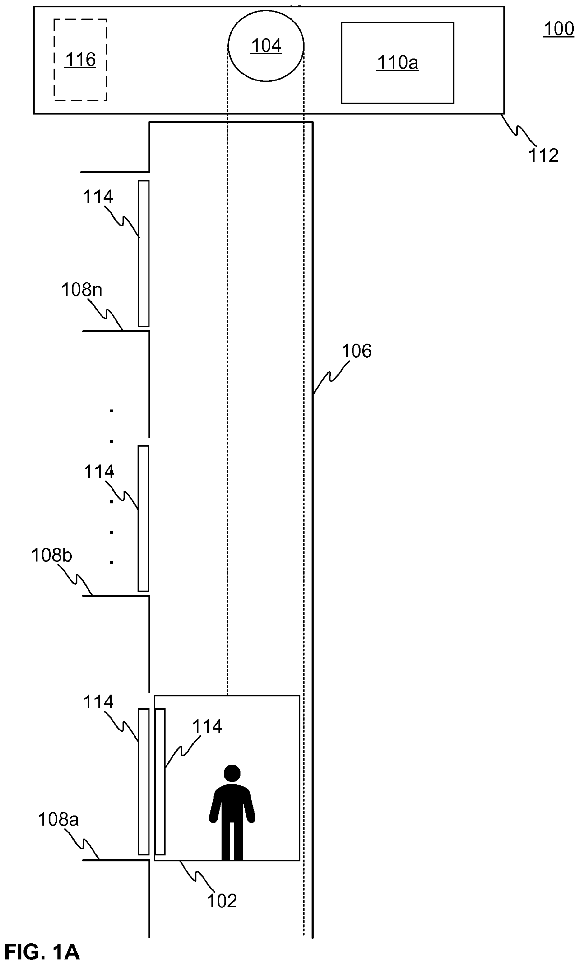

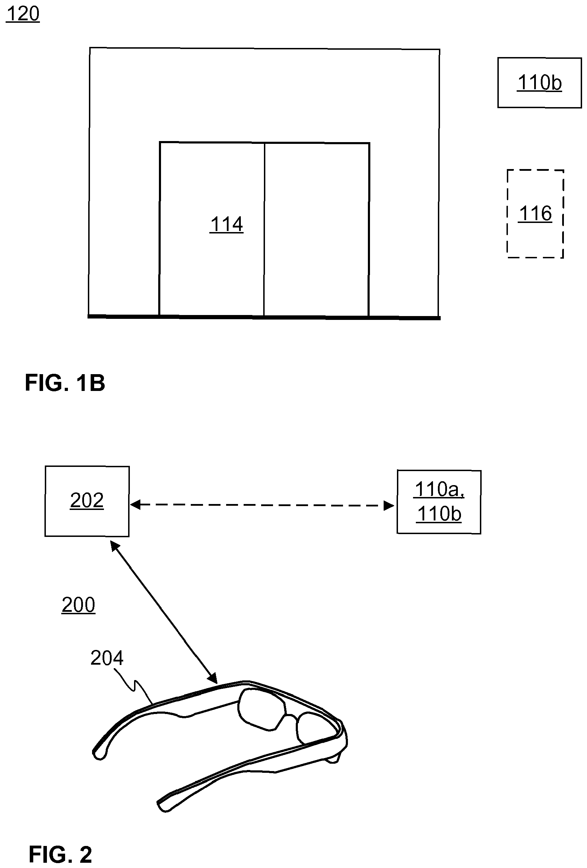

At least some aspects of embodiments according to the present invention may be described, at least in partly, by referring to Figures 1A and 1B. Figure 1A illustrates a non-limiting example of people transport system 100 in which a maintenance interface system 200 according to the present invention may be implemented. Figure 1B illustrates a non-limiting example of an access control system 120 in which a maintenance interface system 200 according to the present invention may be implemented The people transport system 100 may be one of the following: an elevator system, an escalator system, a moving walkway system. The access control system 120 may be one of the following: automatic door system, turnstile system, gate system.

Figure 1A schematically illustrates an example a people transport system 100 being an elevator system. The example elevator system 100 comprises an elevator car 102 and a hoisting machine 104 arranged to drive the elevator car 102 along an elevator shaft 106 between landings 108a-108n. A control unit 110a, such as an elevator control unit, may be arranged to control the operation of the elevator system 100 at least in part. The elevator control unit 110a may reside for example in a machine room 112 or in one of the landings 108a-108n. The elevator car 102 may comprise an elevator car door 114 and each landing 108a-108n may comprise a landing door 114.

Figure 1B schematically illustrates an example of an access control system 120 being an automatic door system. The automatic door system 120 comprises an automatic door 114 and a control unit 110b, such as door control unit, arranged to control the operation of the automatic door system 100 at least in part. The automatic door 114 may be for example a building door or an elevator door, such as car door and/or landing door.

The people transport system 100 and/or the access control system 120 may comprise only the maintenance interface system 200 according to embodiments of the present invention. In other words, a traditional physical maintenance interface device 116 may be replaced with the maintenance interface system 200 according to embodiments of the present invention. One or more maintenance, test, inspection and/or emergency operations of the system may be carried out via the maintenance interface system 200 according to embodiments of the present invention. Alternatively, the people transport system 100 and/or the access control system 120 may comprise the maintenance interface system 200 according to embodiments of the present invention and the traditional physical maintenance interface device 116 as illustrated in the examples of Figures 1A and 1B. In other words, the maintenance interface system 200 according to embodiments of the present invention may be used to supplement the traditional physical maintenance interface device 116. One or more maintenance, test, inspection and/or emergency operations of the system may be carried out via the maintenance interface system 200 according to embodiments of the present invention at least in part and/or via the traditional physical maintenance interface device 116 at least in part. The traditional maintenance interface device 116 shall be accessible to authorized persons only. In elevator systems 100, the traditional physical maintenance interface device 116 may be arranged outside the elevator shaft 106, for example inside the machine room of the elevator system as illustrated in the example of Figure 1A or at a landing.

Figure 2 illustrates schematically an example of the maintenance interface system 200 according to the present invention. The maintenance interface system may provide a visual output representing maintenance related information of the people transport system 100 or the access control system 120 dependent on the system 100, 120 into which the maintenance interface system 200 is implemented. If the maintenance interface system 200 is implemented in the people transport system 100, the maintenance interface system 200 may provide visual output representing maintenance related information of the people transport system 100. Alternatively, if the maintenance interface system 200 is implemented in the access control system 120, the maintenance interface system 200 may provide visual output representing maintenance related information of the access control system 120.

The maintenance interface system 200 may comprise a storage unit 202 and a user device 204. The storage unit 202 may be for example a computing entity, cloud storage, or other digital media storage or system. The storage unit 202 may have maintenance related information of the people transport system 100 or the access control system 120 stored thereon. The storage unit 202 may be communicatively coupled to the control unit 110a of the people transport system 100 or to the control unit 110b of the access control system 120 in order to be able to obtain maintenance related information of the people transport system 100 or the access control system 120. The communication between the control unit 110a, 110b and the storage unit 202 may be implemented in a wired manner or wirelessly at least in part. According to an embodiment of the invention, the storage unit 202 may be implemented as a part of the control unit 110a of the people transport system 100 or the control unit 110b of the access control system 120. According to another embodiment of the invention, the storage unit 202 may be an external storage unit. Some non-limiting examples of the external storage units may e.g. be a remote server, cloud server, computing unit, a network of computing devices. The external unit herein means a unit that locates separate from the people transport system 100 or the access control system 120. In the example of Figure 2, the user device 204 is implemented as a set of smart glasses, but the user device 204 may be any other wearable smart device, such as watch; a mobile terminal device, such as mobile phone, tablet computer, etc.; or any other digital user device comprising one or more displays or other capability, such as a projector, to display the maintenance related information according to the embodiments of the present invention as will be described.

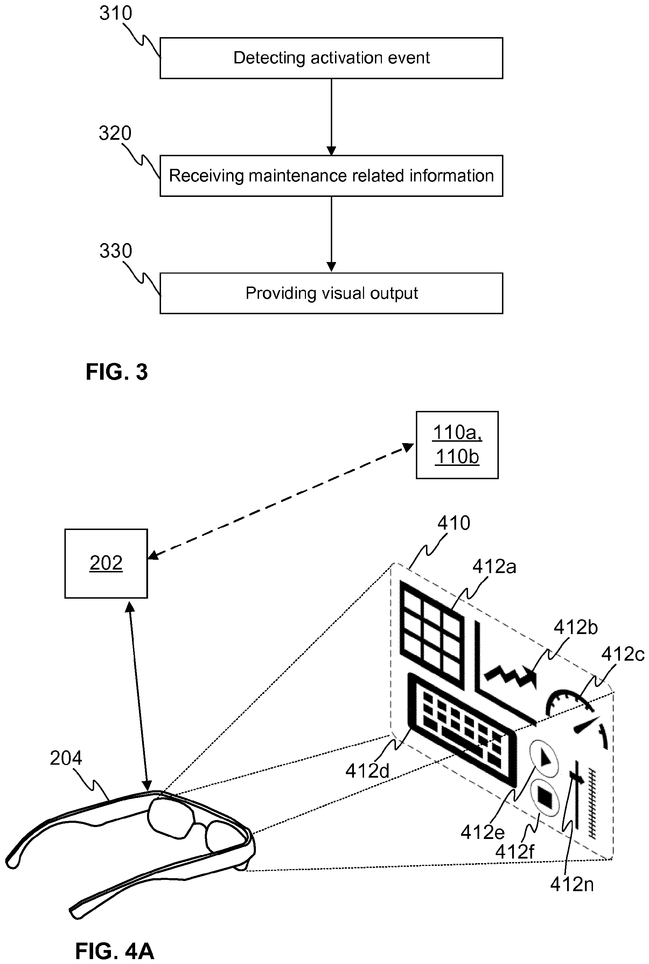

Now, at least some aspects of the present invention may be described by referring to Figure 3 in which a method according to an embodiment of the present invention is schematically illustrated.

In the step 310 an activation event may be detected. The detected activation event may be manual activation or automatic activation. The detection of the manual activation event may be a detection of a user indication. The user indication may be provided for example via the user device 204, e.g. user interaction with the user device 204 and a user, e.g. a maintenance personnel, of the user device 204. The use device 204 may comprise one or more input devices, such as buttons, touchscreen, touch-buttons or similar, for providing the user indication indicating activation of the user device 204. For example, the manual activation event may be a touch, e.g. with a finger or any other pointer, on a touch button of the user device 204.

Detecting the automatic activation event may comprise detecting a location of the user device 204. In other words, detecting the automatic activation event may comprise detecting that the user device 204 resides, i.e. locates, at a predefined location. The predefined location may be for example a machine room; a service center; an environment of the people conveyor system 100 or access control system 120; e.g. a specific landing in an elevator system; any other location suitable for performing maintenance operations. The location detection may be based on any indoor positioning system; Global Positioning System (GPS) or any other outdoor positioning system; any visual image recognition system; a digital readable optical code system, such as barcode, QR code, or any other digital readable optical code; or a radio-frequency system, such as a radio-frequency identification (RFID) system or any other RF-based solution. For example, the user device 204 may detect the automatic activation event by detecting that the user device 204 locates at the predefined location by using any indoor or outdoor positioning system or any visual image recognition system. Alternatively, the user device 204 may comprise scanning and/or reader devices capable to scan and read the digital readable optical code and/or an RFID tag. The digital readable optical code and/or RFID tag may be arranged in the predefined location. The user device 204 may detect the automatic activation event by reading the digital readable optical code and/or the RFID tag.

Alternatively, detecting the automatic activation event may comprise detecting the user device 204 in a vicinity of the people transport system 100 or the access control system 120, i.e. within the environment of the of the people conveyor system 100 or access control system 120. The user device 204 detection may be based on any visual image recognition system; a digital readable optical code system, such as barcode, QR code, or any other digital readable optical code; or a radio-frequency identification (RFID) system. For example, the user device 204 may comprise scanning and/or reader devices capable to scan and read the digital readable optical code and/or RFID tag. The digital readable optical code and/or an RFID tag may be arranged at a suitable location within the environment of the of the people conveyor system 100 or access control system 120. The user device 204 detects the automatic activation event in response to reading the digital readable optical code and/or the RFID tag.

In the step 320 the user device 204 may receive at least part of the stored maintenance related information from the storage unit 202 in response to detecting the activation event. The maintenance related information may comprise, but is not limited to, equipment data; maintenance history data; instructions and documentations, recommended maintenance actions, e.g. based on remote data analysis, data from one or more sensors, usage data, or any other kind of analytics based data, calendar based maintenance or other planned maintenance; equipment type or model; performance data, operational parameters of the system; and/or real time or delayed video image from one or more imaging devices, such as cameras, arranged on site.

In the step 330 the user device 204 may provide a visual output 410, i.e. a display, representing the received maintenance related information by the user device 204. The user device 204 may display the received maintenance related information e.g. on the one or more displays of the user device 204 or through projection by the projector of the user device 204. The provided visual output 410 may act as a digital maintenance interface device of the people transport system 100 or the access control system 120. With the term "digital maintenance interface device" is meant throughout this application a user interface displaying the received maintenance related information, wherein the user interface is not a physical maintenance interface device, such as a maintenance access panel, of the people transport system 100 or the access control system 120. The visual output 410 may be created, i.e. implemented, with augmented reality (AR), virtual reality (VR), or mixed reality (MR). Alternatively, the visual output 410 representing the received maintenance related information may be displayed on the one or more displays of the user device 204, such as a mobile phone, a tablet computer, a smart watch, or any other digital user device comprising one or more displays or other capable to display the visual output 410. This enables a simple way to provide the visual output 410.

In the augmented reality the visual output 410 representing the received maintenance related information, e.g. augmented reality display, may be overlaid on a real-world environment. The visual output 410 implemented with augmented reality display, i.e. augmented reality interface, may be placed virtually on any surface or location. The augmented reality display may e.g. be a see-through augmented reality display or a projected augmented reality display. The see-through augmented reality display may be displayed on a display or a screen of the user device 204, such as a video see-through display or a holographic based see-through display. The projected augmented reality display, i.e. spatial augmented reality display, may be projected on a wall, a panel, or any similar surface. The augmented reality display may be relative to the view of the user of the user device 204, relative to the user device 204, or floating in a static spatial location, i.e. relative to spatial direction. An augmented reality display being relative to the view of the user of the user device 204 means that the augmented reality display is in the same place in relation to the user, when the augmented reality display is activated. In other words, when the user turns their head, the augmented reality display moves accordingly so that the reality display is in the same place in relation to the user. For example, e.g. the augmented reality display may be at a predefined distance from the head of the user, when the augmented reality display is activated, e.g. at a one meter distance from the head of the user. According to an example, if user device 204 is a mobile terminal device, e.g. a tablet computer, when the user places the mobile terminal device in front of their face the augmented reality display may be visible, but if the mobile terminal device is lowered and directed, e.g. by the user of the mobile terminal device, e.g. towards floor, the augmented reality display may no longer visible. An augmented reality display being relative to the user device 204 means that the augmented reality display is in the same place in relation to the user device 204, when the augmented reality display is activated. In other words, when the user device 204 is moved e.g. by the user of the user device, the augmented reality display moves accordingly so that the reality display is in the same place in relation to the user device 204. For example, e.g. the augmented reality display may be at a predefined distance from the user device 204 at a predefined direction, when the augmented reality display is activated, e.g. at a one meter distance from the user device 204 in front of the user device 204. According to an example, when the augmented reality display is pointing to floor the augmented reality display may still be the predefined distance from the user device 204 to the predefined direction, e.g. one meter from the user device 204 in front of the user device 204 somewhere above the floor. An augmented reality display being relative to spatial direction means that the augmented reality display may be floating in a predefined physical location, when the augmented reality display is activated, irrespective location of the user of the user device 204. In other words, the augmented reality display may be floating in a corner of a floor irrespective of a direction from which the user of the user device 204 is looking at the augmented reality display. The visual output 410 implemented with augmented reality may be operated on site, i.e. the user device 204 (and the user of the user device 204) may be in a vicinity of the people transport system 100 or the access control system 120 when operating the maintenance interface device implemented with augmented reality, or remotely, i.e. the user device 204 does not need to be in vicinity of the people transport system 100 or the access control system 120, when operating the maintenance interface device implemented with augmented reality.

In the virtual reality the visual output 410 representing the received maintenance related information, e.g. virtual reality display, i.e. virtual reality interface, may be arranged to replace a real-world environment with a virtual environment. Otherwise, the virtual reality operates as the augmented reality described above. The visual output 410 implemented with virtual reality may be operated on site. Preferably, the visual output 410 implemented with virtual reality may be operated remotely.

In the mixed reality real-world objects may be dynamically integrated into virtual world to produce new environments and visualizations, where physical and digital objects, such as the visual output representing the received maintenance related information, e.g. a mixed reality display, i.e. mixed reality interface, may co-exist and interact in real time. Otherwise, the mixed reality operates as the augmented reality described above. The visual output 410 implemented with mixed reality may be operated on site or remotely.

Figures 4A to 4C illustrate example embodiments of system according to the present invention. Figure 4A illustrates an example embodiment, wherein the user device 204, i.e. smart glasses in this example, is arranged to provide the visual output 410 representing maintenance related information, which is received from the storage unit 202 in response to detecting the activation event. For sake of clarity the user of the user device 204, equipped with, i.e. wearing, the user device 204 is not illustrated in Figure 4A. The provided visual output 410 in the example of Figure 4A is augmented reality display, but the provided visual output 410 may alternatively be virtual reality display or mixed reality display. The augmented reality display of the example of Figure 4A is see-through augmented reality display, but the augmented reality display may alternatively be projected augmented reality display. The provided visual output 410, i.e. the displayed received maintenance related information, may comprise one or more elements 412a-412n each being associated with at least one piece of the received maintenance related information. In other words, each element 412a-412n may represent at least one piece of the received maintenance related information. Some of the elements 412a-412n may be associated with at least one piece of the received maintenance related information enabling providing output information to the user, e.g. the elements 412a-412c in the example of Figure 4A. Some of the elements 412a-412n may be associated with at least one piece of the received maintenance related information enabling interactive operations to receive, i.e. detect, user indication from the user, e.g. the elements 412d-412n in the example of Figure 4A. The provided visual output 410 and/or the elements 412a-412c of the visual output 410 may comprise, but not limited to, text, words, tables, graphs, buttons, gauges, switches such as slider switches, rotating wheels, light indicators, images, video images, and/or animations, etc. The size of the provided visual output 410 may be scalable according to displayed content, e.g. number or displayed elements 412a-412n.

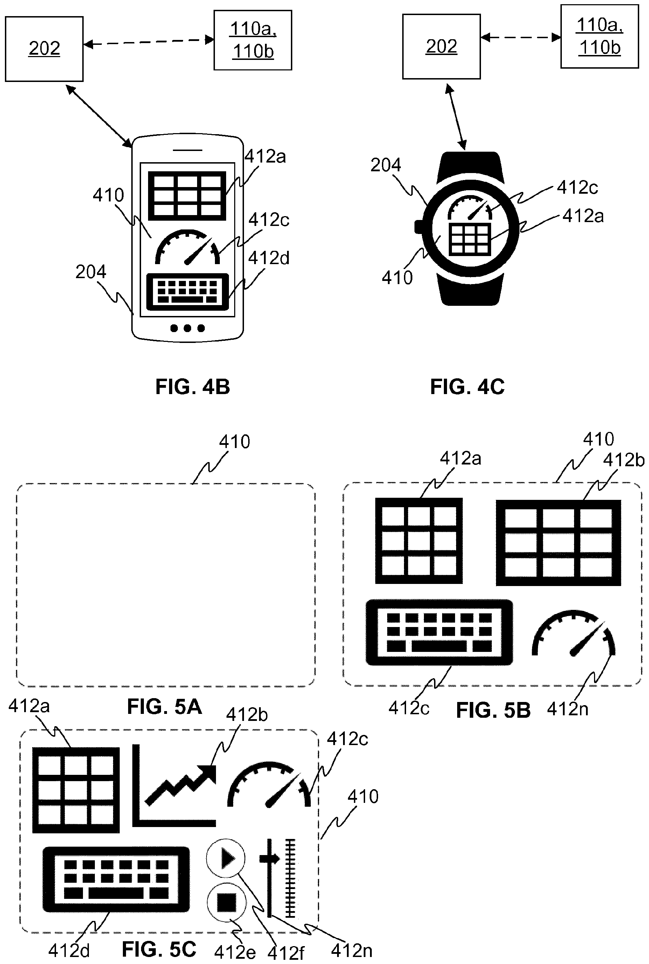

Figure 4B illustrates another example, wherein the user device 204, i.e. mobile phone in this example, is arranged to display on the display of the user device 204, e.g. touchscreen of the mobile phone, the visual output 410 representing maintenance related information, which is received from the storage unit 202 in response to detecting the activation event. In the example of Figure 4B, the visual output 410 displayed on the display of the mobile phone 204 comprises elements 412a, 412c being associated with at least one piece of the received maintenance related information enabling providing output information and element 412d being associated with at least one piece of the received maintenance related information enabling interactive operations causing that the visual output 410 may be capable to provide output to the user and/or to receive user indication from the user. Figure 4C illustrates another example, wherein the user device 204, i.e. smart watch in this example, is arranged to display on the display of the user device 204, e.g. a screen of the smart watch, the visual output 410 representing maintenance related information, which is received from the storage unit 202 in response to detecting the activation event. In the example of Figure 4C, the visual output 410 displayed on the display of the smart watch 204 comprises only elements 412a, 412c being associated with at least one piece of the received maintenance related information enabling providing output information causing that the visual output 410 may be capable only to provide output information to the user, but not receive any user indication from the user.

The part of the maintenance related information received by the user device 204 in the step 320 from the storage unit 202 may depend on an access level assigned for the user device 204. The user device 204 may be capable to have different access levels indicating different level access rights for the user of the user device 204. Different amount of the maintenance related information and/or content of the maintenance related information may be received from the storage unit 202 for each access level assigned for the user device 204. The access level may be device specific and/or user specific. Device specific access level means that each user device 204 may have a specific access level irrespective of the user of the user device 204. The user specific access level means that each user may have a specific access level. This enables that the same user device 204 may have different access levels for different users of the user device 204. According to an example, unauthorized user, an operator of the people transport system 100 or the access control system 100, and a maintenance personnel may each have different access level for the user device 204 causing that different amount and/or content of the maintenance related information may be received from the storage unit 202 for each access level. Figure 5A-5C illustrate non-limiting example views of the provided visual output 410 with different amount and/or content of the maintenance related information received by the user device 204 from the storage unit 202 depending on the access level assigned for the user device 204. Figure 5A illustrates an example view of the visual output 410 provided for an unauthorized person having a first access level, e.g. a lowest access level, for which no maintenance related information can be received at all causing that the provided visual output 410 comprises an empty display. Figure 5B illustrates an example view of visual output 410 provided for the maintenance personnel having a second access level, e.g. an intermediate access level, for which a first part of the stored maintenance related information may be received causing that the provided visual output 410 represents the first part of the stored maintenance related information. Figure 5C illustrates an example view of visual output provided for the operator having a third access level, e.g. a highest access level, for which a second part of the stored maintenance related information may be received causing that that the provided visual output 410 represents the second part of the stored maintenance related information. The second part of the stored maintenance related information may be at least partly different from the first part of the stored maintenance related information. For example, the visual output 410 provided for the operator may comprise information relating to one or more operations of the people transport system 100 or the access control system 120 and the visual output 410 provided for the maintenance personnel may comprise information relating to one or more operational parameters of the people transport system 100 or the access control system 120. The different access levels may also enable personalizing of the visual output 410, e.g. appearance or layout. The personalization may comprise e.g. personalized language, personalized location or layout of one or more elements 412a-412n of the visual output 410. Alternatively or in addition, the part of the maintenance related information received by the user device 204 in the step 320 from the storage unit 202 may be adapted or adjusted at any time in order to improve the adaptability of the visual output 410. According to a non-limiting example, if some further maintenance related information is stored into the storage unit 202, the part of the maintenance related information received by the user device 204 in the step 320 from the storage unit 202 may be adapted to include the further maintenance related information.

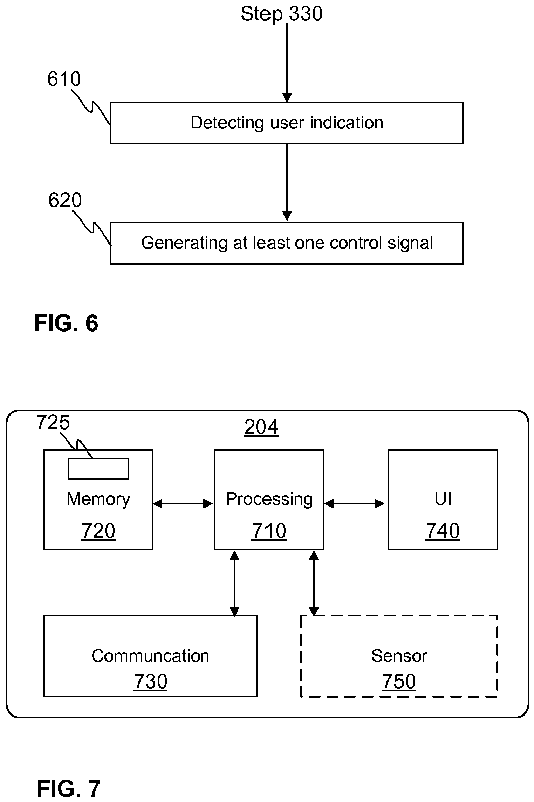

Next, at least some further aspects of the present invention may be described by referring to Figure 6 in which a method according to an embodiment of the present invention is schematically illustrated.

In the step 610, a user indication may be detected, i.e. received. The user device 204 may comprise user one or more input devices, such as touchscreens, keypad, keyboard, buttons, microphones, and/or one or more sensor devices, such as imaging devices, e.g. cameras, accelerometers, gyroscopes, compasses, and/or any other sensor devices capable to detect movement, for detecting the user indication. The user indication detectable with the one or more input devices and/or the one or more sensor device of the user device 204 may comprise at least one of the following: gesture, gaze, voice, touch.

The touch-based user indication may be detected for example by a touchscreen or touch-based buttons of the user device 204. The visual output 410 may be displayed at least partly, e.g. one or more elements 412a-412n being associated with at least one piece of the received maintenance related information enabling interactive operations, on the touchscreen and/or touch-based buttons arranged to detect the touch-based user indication. For example, in the example of Figure 4B the visual output 410 may be displayed on the touchscreen of the mobile phone 402 and the element 412d may enable interactive operations with the user to detect, i.e. receive, the user indication, e.g. one or more touches with a finger or any other pointer. The voice-based user indication may be detected by one or more microphones of the user device 204. The gaze-based user indication may be detected by one or more sensor devices, such as cameras, of the user device 204.

The gesture-based, i.e. motion-based, user indication may be detected by one or more sensor devices of the user device 204, such as cameras, accelerometers, gyroscopes, compasses, and any other sensor devices capable to detect movement. Alternatively, the gesture-based user indication may be detected by one or more sensor devices arranged in a peripheral device such as a pointer, a glove or other wearable accessory. The detected gestures, e.g. gestures of a hand of the user, may mimic physical user interaction with a physical input device. According to a non-limiting example, if the visual output 401 comprises one or more elements 412a-412n being associated with at least one piece of the received maintenance related information enabling interactive operations to receive user indication, e.g. an element 412a-412n representing a switch, button or keypad, e.g. the slide switch 412n of the example in Figure 4A, the detected user indication may be a detection of slide type gesture of the hand of the user at a location of said element 412a-412n, which mimics the sliding of a physical slide switch by the hand of the user. Similarly, in case of element 412a-41n representing any other type switch, keypad, or button, the detected user indication may be a detection of gesture of the hand of the user at a location of said element 412a-412n, which mimics the gesture of the hand of the user using the corresponding physical input device.

In the step 620, the user device 204, may generate at least one control signal to the control unit 110a of the people transport system 100 for controlling one or more operations of the people transport system 100 and/or one or more operational parameters of the people transport system 100 associated with the detected user indication. In response to receiving the at least one control signal from the user device 204, the control unit 110a of the people transport system 100 is arranged to control the operation of the people transport system 100 according to the at least one control signal and/or to control, i.e. adjust, one or more operational parameters of the people transport system 100 according to the at least one control signal. Alternatively, the user device 204, may generate at least one control signal to the control unit 110b of the access control system 120 for controlling one or more operations of the access control system 120 and/or one or more operational parameters of the access control system 120 associated with the detected user indication. In response to receiving the at least one control signal from the user device 204, the control unit 110b of the access control system 120 is arranged to control the operation of the access control system 120 according to the at least one control signal and/or to control, i.e. adjust, one or more operational parameters of the access control system 120 according to the at least one control signal. The at least one control signal may comprise instructions to perform one or more maintenance, test, inspection and/or emergency operations or any other operations corresponding to operations that may be provided with the physical maintenance interface device 116 of the people transport system 100 or the access control system 120. The at least one control signal may further comprise for example, but not limited to, one or more of the following: maintenance related reporting, such as performed maintenance operations, spare part orders, recommendation(s) for next visit; video or voice calls to an external unit, e.g. support organization; etc.

Figure 7 schematically illustrates a used device 204 according to an embodiment of the invention. The user device 204 may comprise a processing unit 710, a memory unit 720, a communication interface 730, a user interface 740, and one or more sensor devices 750 among other entities. The processing unit 710, in turn, may comprise one or more processors arranged to implement one or more tasks for implementing at least part of the method steps as described. For example, the processing unit 710 may be arranged process the received maintenance related information to generate a display on or with the user device 204 to display the received maintenance related information to the user in the manner as described. The memory unit 720 may be arranged to store computer program code 725 which, when executed by the processing unit 310, cause the user device 204 to operate as described. Moreover, the memory unit 720 may be arranged to store, as described, received maintenance related information, and any other data. The communication interface 730 may be arranged to implement, e.g. under control of the processing unit 710, one or more communication protocols enabling the communication with external entities as described. The communication interface 730 may comprise necessary hardware and software components for enabling e.g. wireless communication and/or communication in a wired manner. The user interface 740 may comprise one or more input/output devices, such as buttons, keyboard, touchscreen, microphone, loudspeaker, display and so on, for receiving input from a user and outputting information to a user. The one or more sensor devices 750 may comprise the one or more sensor devices for detecting the user indication as described, and/or any other sensor devices.

The specific examples provided in the description given above should not be construed as limiting the applicability and/or the interpretation of the appended claims. Lists and groups of examples provided in the description given above are not exhaustive unless otherwise explicitly stated.

## Claims

1. A maintenance interface system (200) for providing a visual output (410) representing maintenance related information of a people transport system (100) or access control system (120), the maintenance interface system (200) comprising:
a storage unit (202) having maintenance related information of the people transport system (100) or the access control system (120) stored thereon, and
a user device (204) arranged to:
receive at least part of the stored maintenance related information from the storage unit (202) in response to detecting an activation event, and
provide a visual output (410) representing the received maintenance related information.

2. The system (200) according to claim 1, wherein the provided visual output (410) is augmented reality display, virtual reality display, or mixed reality display.

3. The system (200) according to claim 1 or 2, wherein the user device (204) further comprises one or more input devices and/or one or more sensor devices arranged to detect user indication, wherein the user device (204) is arranged to generate at least one control signal to a control unit (110a) of the people transport system (100) or to a control unit (110b) of the access control system (120) for controlling one or more operations of the people transport system (100) or the access control system (120) and/or one or more operational parameters of the people transport system (100) or the access control system (120) in association with the detected user indication.

4. The system (200) according to claim 3, wherein the user indication comprises at least one of the following: gesture, gaze, voice, touch.

5. The system (200) according to any of the preceding claims, wherein the detected activation event is one of the following: manual activation, automatic activation.

6. The system (200) according to claim 5, wherein detecting the automatic activation event comprises: detecting a location of the user device (204) or detecting the user device (204) in a vicinity of the people transport system (100) or the access control system (120).

7. The system (200) according to any of the preceding claims, wherein the part of the maintenance related information represented with the provided visual output (410) depends on an access level assigned for the user device (204).

8. The system (200) according to any of the preceding claims, wherein the user device (204) is a wearable smart device, a mobile terminal device, or a digital user device comprising one or more displays or other capability to display the visual output (410).

9. The system (200) according to any of the preceding claims, wherein the people transport system (100) is one of the following: an elevator system, an escalator system, or a moving walkway system, and the access control system (120) is one of the following: automatic door system, turnstile system, gate system.

10. A method for providing visual output (410) representing maintenance related information of a people transport system (100) or the access control system (120), the method comprising:
detecting (310) an activation event;
receiving (320), by a user device (204), at least part of maintenance related information of the people transport system (100) or the access control system (120) stored on a storage unit (202); and
providing (330), by the user device (204), a visual output (401) representing the received maintenance related information.

11. The method according to claim 9, wherein the provided visual output (410) is augmented reality display, virtual reality display, or mixed reality display.

12. The method according to claim 10 or 11, further comprising:
detecting (610), by one or more input devices and/or one or more sensor devices of the user device, user indication, and
generating (620), by the user device (204), at least one control signal to a control unit (110a) of the people transport system (100) or to a control unit (110b) the access control system (120) for controlling one or more operations of the people transport system (100) or the access control system (120) and/or one or more operational parameters of the people transport system (100) or the access control system (120) in association with the detected user indication.

13. The method according to claim 12, wherein the user indication comprises at least one of the following: gesture, gaze, voice, touch.

14. The method according to any of claims 10 to 13, wherein the detected activation event is one of the following: manual activation, automatic activation.

15. The method according to claim 14, wherein detecting the automatic activation event comprises: detecting a location of the user device (204) or detecting the user device (204) in a vicinity of the people transport system (100) or the access control system (120).

16. The method according to any claims 10 to 15, wherein the part of the stored maintenance related information represented with the provided visual output (410) depends on an access level assigned for the user device (204).

17. The method according to any of claims 10 to 16, wherein the user device (204) is a wearable smart device, a mobile terminal device, or a digital user device comprising one or more displays or other capability to display the visual output.

18. The method according to any of claims 10 to 17, wherein the people transport system (100) is one of the following: an elevator system, an escalator system, a moving walkway system; and the access control system (120) is one of the following: automatic door system, turnstile system, gate system.
